# EUROPEAN PATENT APPLICATION

(11) **EP 1 094 652 A2**
(43) Date of publication of application: **25.04.2001**
(21) Application number: 00122728.9
(22) Date of filing: 18.10.2000
(51) Int. Cl.: H04M 1/02, H04M 1/22

(54) **Portable radio device**

(30) Priority: 19.10.1999 JP 29731599
(71) Applicant: MATSUSHITA ELECTRIC INDUSTRIAL CO., LTD., Kadoma-shi, Osaka (JP)
(72) Inventor: Satou, Noriyoshi, Yokohama-shi, Kanagawa (JP); Ohira, Akinoshi, Yokohama-shi, Kanagawa (JP); Ishikawa, Yoshito, Yokohama-shi, Kanagawa (JP)
(74) Representative: Grünecker, Kinkeldey, Stockmair & Schwanhäusser Anwaltssozietät

(57) **Abstract**

A portable terminal device using a material having a light emitting ability in a part or a display part of the device by printing or coating, in a material or a transfer foil for secondary light emission so as to improve the designing property by the existence demonstrating means of the device and light emission. A display part comprises a liquid crystal display device, with a transparent liquid crystal panel material bonded to a display part of the liquid crystal display device by a double side coated adhesive tape at the position of the display part of a cover. Furthermore, first and second printing layers containing a luminous/fluorescent material having a self light emitting ability or a reactive light emitting ability by a black light are formed on the transparent liquid crystal panel material. Moreover, a transparent UV curing ink layer is applied on the printing layers by coating for protection from the external friction.

## Description

### BACKGROUND OF THE INVENTION

The present invention relates to a portable radio device, in particular, it relates to that to have secondary light emission by using a material having a light emitting ability in a part or a display part of the device by printing or coating, in a material or a transfer foil so as to improve the designing property by an existence demonstrating means of the device and light emission.

As a result of recent remarkable downsizing trend of portable radio devices such as portable telephone devices and PHS (personal handy phone systems), it is difficult to find these devices in a dark place in the case they are lost. Moreover, as to the designing property by light emission, the conventional notifying and existence demonstrating means by electric illumination, such as receipt indicators and liquid crystal back lighting cannot satisfy the users any longer.

Therefore, a luminous/fluorescent seal and free painting have been used recently as a secondary light emitting means. However, since they are applied on the coat of a UV curing coating (ultraviolet curing resin) or a clear coating, a problem arises in that they can easily be peeled off by the external friction force, and thus they are vulnerable.

### SUMMARY OF THE INVENTION

In order to solve the above-mentioned conventional problems, a first object of the invention is to provide a portable radio device comprising an electric illumination notifying means provided in the device as a primary light emitting means to be the main existence demonstrating means as well as a material having a light emitting ability in a part or a display part of the device by printing or coating, in a material or a transfer foil for secondary light emission so as to improve the designing property by the existence demonstrating means of the device and light emission. Furthermore, a second object is to provide a portable radio device capable of realizing enrichment of light emission colors by light emission according to a first light emission embodiment of using a material containing a luminous/fluorescent material in a part to be illuminated by an electric illumination notifying means provided in the device as the primary light emitting means such as a key button, a receipt indicator, and a liquid crystal panel for secondary light emission and emitting a light by the primary light emitting means, a second light emission embodiment of secondary light emission by the use of the luminous/fluorescent material, and a third light emission embodiment of emitting a light by a combination of the primary light emitting means and the material containing the luminous/fluorescent material.

A first aspect of the invention is a portable radio device comprising an notifying and existence demonstrating means by electric illumination such as a receipt indicator or a liquid crystal back lighting, and a printing layer/coating layer containing a luminous/fluorescent material having a self light emitting ability or a reactive light emitting ability by a black light, wherein the printing layer/coating layer is protected from the external friction by a UV curing coating, or a clear printing/coating.

According to the configuration, since the printing layer/coating layer is overcoated with the UV curing coating or the clear coating, it can be extremely strong with respect to the external friction so as to satisfy the users.

Moreover, a second aspect of the invention is a portable radio device comprising an notifying and existence demonstrating means by electric illumination such as a receipt indicator or a liquid crystal back lighting, and a printing layer/coating layer containing a luminous/fluorescent material having a self light emitting ability or a reactive light emitting ability by a black light, wherein the printing layer/coating layer is protected from the external friction by being provided on the rear surface of a transparent part.

According to the configuration, since the printing layer/coating layer can be protected by the transparent part, it can be extremely strong with respect to the external friction so as to satisfy the users.

Furthermore, a third aspect of the invention is the portable radio device according to the first or second aspect, wherein the printing layer/coating layer containing a luminous/fluorescent material having a self light emitting ability or a reactive light emitting ability by a black light is provided in an in-mold or hot-stamp transfer foil, with the printing layer/coating layer protected from the external friction by being provided below the UV curing coating, or the clear printing layer/coating layer in the foil structure.

According to the configuration, since the printing layer/coating layer is overcoated with the UV curing coating or the clear coating, it can be extremely strong with respect to the external friction so as to satisfy the users.

Moreover, a fourth aspect of the invention is the portable radio device according to the first or second aspect, wherein the printing layer/coating layer containing a luminous/fluorescent material having a self light emitting ability or a reactive light emitting ability by a black light is provided in an in-mold or hot-stamp transfer foil, with the printing layer/coating layer protected from the external friction by being provided on the rear surface of a transparent part.

According to the configuration, since the printing layer/coating layer can be protected by the transparent part, it can be extremely strong with respect to the external friction so as to satisfy the users.

Furthermore, a fifth aspect of the invention is a portable radio device comprising an notifying and existence demonstrating means by electric illumination such as a receipt indicator or a liquid crystal back lighting, and a part obtained by molding a material containing a luminous/fluorescent material having a self light emitting ability or a reactive light emitting ability by a black light, wherein the part itself has a strength sufficient for enduring the external friction.

According to the configuration, since the part is obtained by molding a material containing a luminous/fluorescent material, it can be extremely strong with respect to the external friction so as to satisfy the users.

Furthermore, a sixth aspect of the invention is a portable radio device comprising an notifying and existence demonstrating means by electric illumination such as a receipt indicator or a liquid crystal back lighting, and a part obtained by molding a material containing a luminous/fluorescent material having a self light emitting ability or a reactive light emitting ability by a black light, wherein the part is protected from the external friction by a UV curing coating, or a clear printing/coating.

According to the configuration, since the part is obtained by molding a material containing a luminous/fluorescent material as well as the part is overcoated with the UV curing coating or the clear coating, it can be extremely strong with respect to the external friction so as to satisfy the users.

Moreover, a seventh aspect of the invention is a portable radio device comprising a part to be illuminated by electric illumination, obtained by molding a material containing a luminous/fluorescent material having a self light emitting ability or a reactive light emitting ability by a black light.

According to the configuration, light emission can be executed according to a first light emission embodiment of illumination by electric illumination, a second light emission embodiment of secondary light emission by the use of a material having a light emitting ability, and a third light emission embodiment of emitting a light by a combination of the primary light emitting means and the material containing the luminous/fluorescent material.

Furthermore, an eighth aspect of the invention is a portable radio device comprising a key button to be illuminated by electric illumination, obtained by molding a material containing a luminous/fluorescent material having a self light emitting ability or a reactive light emitting ability by a black light.

According to the configuration, the key button to be illuminated by electric illumination can emit a light owing to the luminous/fluorescent material.

Moreover, a ninth aspect of the invention is a portable radio device comprising a transparent cover of a receipt indicator to be illuminated by electric illumination, obtained by molding a material containing a luminous/fluorescent material having a self light emitting ability or a reactive light emitting ability by a black light.

According to the configuration, the transparent cover of the receipt indicator can emit a light owing to the luminous/fluorescent material.

Furthermore, a tenth aspect of the invention is a portable radio device comprising a liquid crystal panel to be illuminated by electric illumination, obtained by molding a material containing a luminous/fluorescent material having a self light emitting ability or a reactive light emitting ability by a black light.

According to the configuration, the liquid crystal panel to be illuminated by electric illumination can emit a light owing to the luminous/fluorescent material.

### BRIEF DESCRIPTION OF THE DRAWINGS

FIG. 1 is a cross-sectional view taken on the line A-A in the vicinity of a display part, showing a configuration of a portable radio device according to an embodiment of the invention;
FIG. 2 is a cross-sectional view taken on the line B-B in the vicinity of a printing part (star mark) between a rear side switch part and a battery hook part for controlling the storage of a battery, showing a configuration of a portable radio device according to an embodiment of the invention;
FIG. 3 is a cross-sectional view taken on the line C-C in the vicinity of a rear side switch part, showing a configuration of a portable radio device according to an embodiment of the invention; and
FIG. 4A is a cross-sectional view of a key button to be illuminated by an LED of a portable radio device according to an embodiment of the invention; FIG. 4B is a plan view showing the position of the contact point patterns of the printed board, and the LED in the embodiment; and FIG. 4C is another cross-sectional view showing the state wherein the key button is illuminated by the LED in the embodiment.

### DETAILED DESCRIPTION OF THE PREFERRED EMBODIMENTS

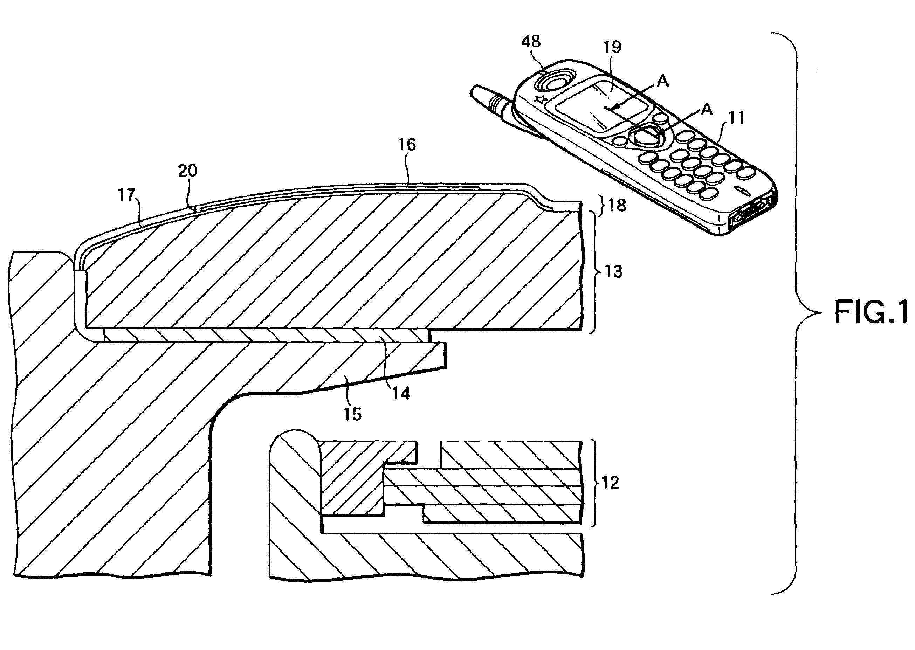

Hereinafter, embodiments of the invention will be described with reference to FIGS. 1 to 4C.

FIG. 1 is a cross-sectional view taken on the line A-A in the vicinity of a display part, showing a configuration of a portable radio device according to an embodiment of the invention.

In the cross-sectional view of FIG. 1, a display part 19 is provided with a liquid crystal display device 12 in a main body housing, with a transparent liquid crystal panel material 13 bonded to a display part of the liquid crystal display device 12 by a double side coated adhesive tape 14 at the portion of the display part 19 of a cover 15. First and second printing layers 16, 17 containing a luminous/fluorescent material having a self light emitting ability or a reactive light emitting ability by a black light are formed on the transparent liquid crystal panel material 13. Further, a transparent UV curing ink layer 20 is applied on the printing layers 16, 17 by coating for protection from the external friction.

Instead of the printing layers 16, 17, a printing/coating layer applied in an in-mold or hot-stamp transfer foil 18 can be used. Moreover, although a printing layer containing a luminous/fluorescent material is formed in the above-mentioned embodiment, a coating layer containing a luminous/fluorescent material can be formed as well.

An overcoat is applied on the printing/coating layer containing a luminous/fluorescent material having a self light emitting ability or a reactive light emitting ability by a black light by a UV curing coating or a clear printing /coating for protection from the external friction.

Moreover, although the case of containing a luminous/fluorescent material in both printing layers 16, 17 is explained in the above-mentioned embodiment, the luminous/fluorescent material can be contained either one of the printing layers 16, 17, or the liquid crystal panel material 13 can be made from a transparent plastic material containing a luminous/fluorescent material having a self light emitting ability or a reactive light emitting ability by a black light.

In the case the liquid crystal panel material 13 contains a luminous/fluorescent material, the entirety of the liquid crystal panel material 13 can emit a light secondarily by the self light emission or by the reactive light emission by a black light without the need of coating or printing a transfer layer 18, the first printing layer 16 or the second printing layer 17. The liquid crystal panel material 13 emits a light secondarily with a color of a second embodiment different from the color such as green and orange of an LED of the first embodiment as an illumination color of the back light for the liquid crystal. In the case the back light of the liquid crystal is lit when the liquid crystal panel material 13 emits a light secondarily in a dark place, the color of the liquid crystal panel material 13 in the secondary light emission and the green or orange color of the back light of the liquid crystal are mixed so as to emit a light of a color of a third embodiment unexpected by a user.

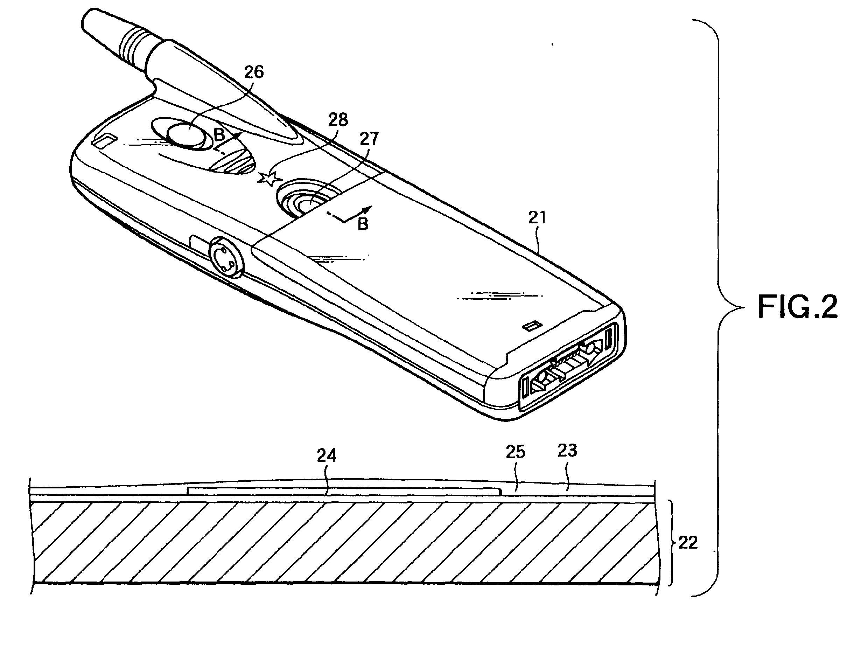

FIG. 2 is a cross-sectional view taken on the line B-B in the vicinity of a printing part (star mark) 28 between a rear side switch part 26 and a battery hook part 27, showing a configuration of a portable radio device according to an embodiment of the invention.

In the cross-sectional view of FIG. 2, the printing part (star mark) 28 is provided with a case 22 material applied with a color coat 23. Furthermore, a printing layer 24 containing a luminous/fluorescent material having a self light emitting ability or a reactive light emitting ability by a black light is formed thereon, and a overcoat is further applied thereon by a UV curing coating or a clear coat 25 for protection from the external friction.

Although the printing layer containing a luminous/fluorescent material is formed in the embodiment of FIG. 2, a coating layer containing a luminous/fluorescent material can be formed as well. Moreover, instead of the printing layer, a print/coat applied in an in-mold or hot-stamp transfer foil can be used.

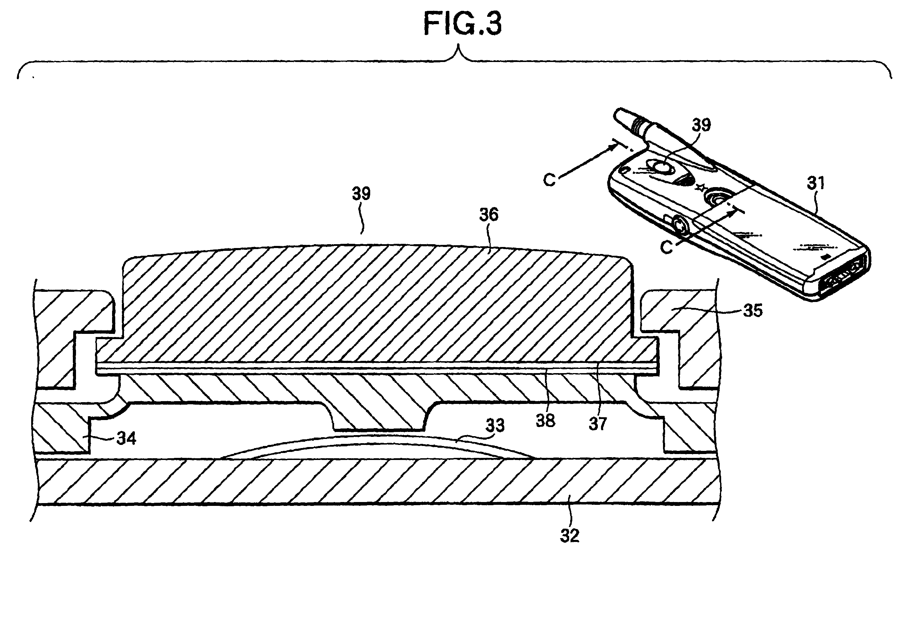

FIG. 3 is a cross-sectional view taken on the line C-C in the vicinity of a rear side switch part 39, showing a configuration of a portable radio device according to an embodiment of the invention.

In the cross-sectional view of FIG. 3, the rear side switch 39 comprising a diaphragm 33 for covering a contact point provided on a printed board 32, operates a switch by elastic deformation of the diaphragm 33 by the press of a key button 36 supported between a rubber base 34 and a case 35. First and second printing layers 37, 38 containing a luminous/fluorescent material having a self light emitting ability or a reactive light emitting ability by a black light are formed on the bottom surface of the key button 36 made from a transparent material. In the case of FIG. 3, further application of an overcoat by a UV curing coating or a clear coat is not needed on the printing layers because the printing layers are protected from the external friction by the key button made from a transparent material.

Although the printing layers are provided in the above-mentioned embodiment, the material comprising the key button can contain a luminous/fluorescent material having a self light emitting ability or a reactive light emitting ability by a black light without providing the printing layers. In this case, since the key button itself is thick, an overcoat by a UV curing coating or a clear coat needs not be applied on the side facing to the outside.

Since FIG. 3 shows an example of a part of the rear side switch, depending on a part, it can be protected from the external friction by further applying an overcoat of a UV curing coating or a clear coat on the printing layers.

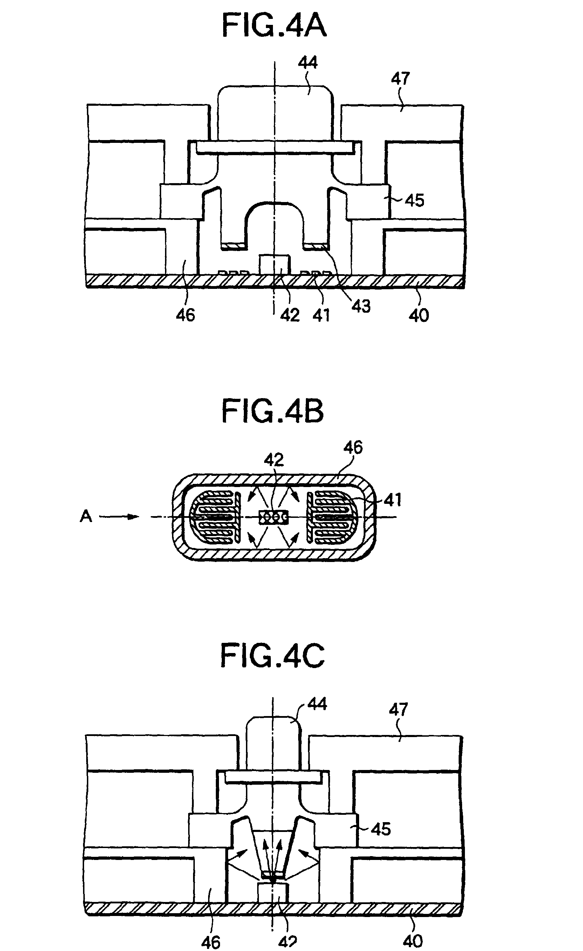

FIGS. 4A to 4C show an example of a key button to be illuminated by the LED. A cross-sectional view of FIG. 4A shows a key button 44 with two contact point patterns 41 printed on a printed board 40 with an interval, and an LED 42 disposed midway of the two contact point patterns 41 so as to press the contact point patterns 41 by the split tip end parts having a conductive film 43.

In the case the key button 44 is pressed from above, a portion contacting with a skirt part 45 is deformed and moved downward so that the conductive film 43 is contacted with the contact point patterns 41 on the printed board 40. Accordingly, the LED 42 is lit by an unillustrated illumination circuit so as to illuminate the key button 44.

FIG. 4B is a plan view of the position of the contact point patterns 41 of the printed board 40, the LED 42, and a rib 46 surrounding them for reflecting a light of the LED 42. FIG. 4C is a cross-sectional view viewed from the arrow A direction of FIG. 4B, showing the state after the press of the key button 44 wherein the key button 44 is elevated by the force of the skirt part 45 so as to be contacted with the case 47 and the LED 42 once lit continues to illuminate the key button 44.

Similar to the above-mentioned case of the liquid crystal panel 13, the key button 44 can be made from a transparent material containing a luminous/fluorescent material having a self light emitting ability or a reactive light emitting ability by a black light so as to have secondary light emission in the key button 44 by the self light emission or by the reactive light emission by a black light without the need of coating a transfer foil or printing a printing layer. Therefore, the light emission can be realized according to a first light emission embodiment by the LED 42, a second light emission embodiment of secondary light emission of the key button 44 itself, and a third light emission embodiment by a combination of the light from the LED 42 and the secondary light emission.

Although details of the structure are not illustrated, by molding a transparent cover 48 of a receipt indicator by an LED commonly provided in a corner part of a main body housing in a portable phone device shown in FIG. 1 or a pager with a transparent material containing a luminous/fluorescent material having a self light emitting ability or a reactive light emitting ability by a black light like the liquid crystal panel or the key button, secondary light emission can be enabled by the self light emission or by the reactive light emission by a black light without the need of coating a transfer foil or printing a printing layer. Therefore, the light emission can be realized according to a first light emission embodiment by the LED 42, a second light emission embodiment of secondary light emission of the transparent cover 48 itself, and a third light emission embodiment by a combination of the light of the LED and the secondary light emission.

As heretofore explained, according to the invention, the first object of the invention to provide a portable radio device with an improved designing property for the existence demonstrating means of the device and light emission by applying an overcoat on a printing layer/coating layer, an in-mold or hot stamp transfer foil containing a luminous/fluorescent material having a self light emitting ability or a reactive light emitting ability by a black light by a UV curing coating or a clear printing/coating so as to have secondary light emission while being protected from the external friction can be achieved.

Moreover, according to the invention, the second object of the invention to provide a portable radio device capable of realizing enrichment of light emission colors by light emission according to a first light emission embodiment of using a material containing a luminous/fluorescent material having a self light emitting ability or a reactive light emitting ability by a black light in a part to be illuminated by electric illumination, a second light emission embodiment of secondary light emission by the part itself, and a third light emission embodiment of emitting a light by a combination of the electric light illumination and the secondary light emission can be achieved.

As mentioned above, according to the invention:
(1) Since a printing/coating layer containing a luminous/fluorescent material to have reactive light emission by a black light is applied on, for example, an LCD (liquid crystal display device) panel, it can emit a light with a color different from the color of the electric illumination for the liquid crystal back light in the case a black light is directed thereto. Furthermore, it can emit a light with a further different color in combination with the electric illumination color.
(2) Similar to the case of the item (1), since a printing/coating layer containing a luminous/fluorescent material to have reactive light emission by a black light is applied on, for example, a key button, it can emit a light with a color different from the color of the electric illumination for the key back light in the case a black light is directed thereto. Furthermore, it can emit a light with a further different color in combination with the electric illumination color.
(3) According to a first light emission embodiment of using a material containing a luminous/fluorescent material having a self light emitting ability or a reactive light emitting ability by a black light in a part to be illuminated by electric illumination, such as a liquid crystal panel, a receipt indicator and a key button, a second light emission embodiment of secondary light emission by the key button itself, and a third light emission embodiment of emitting a light by a combination of the electric light illumination and the secondary light emission, enrichment of light emission colors can be realized.
(4) Recently, more and more people use a "black light" for the interior illumination in a room or an automobile. In particular, in the case of using the black light in the automobile, since the existence of the device can always be confirmed in a dark automobile owing to the black light, traffic accident can be prevented. Since the existence demonstrating means utilizes the black light, the battery of the portable radio device is not consumed at all.
(5) Although conventional notifying or existence demonstrating means according to electric illumination such as receipt indicators, liquid crystal back lights, and key illuminations are beautiful in a dark place so as to provide a good interior effect, they cannot always be lit in a commercial set. However, by the use of those reactive with a black light, they can always emit a light as well as the interior effect can be realized.
(6) In the case a portable radio device is lost in a dark place, although the conventional devices utilizing notifying or existence demonstrating means by electric illumination can be found by making a call to it, devices can be found without the need of calling if a print containing a luminous material having a self light emitting ability is applied thereon. Moreover, in the case the search by the electric illumination is unable for some reason (for example, the device is upside down or outside the receivable area), it can be the first discovery means. Furthermore, the battery of the portable radio device is not consumed at all by the existence demonstrating means by electric illumination.

## Claims

1. A portable radio device comprising:
primary illumination means including an electric illumination such as a receipt indicator or a liquid crystal back lighting; and
a secondary illumination layer containing one of a luminous material having a self light emitting ability and a fluorescent material having a reactive light emitting ability by a black light,
wherein the secondary illumination layer is protected from the external friction by a UV curing coating or a clear printing/coating.

2. A portable radio device comprising:
primary illumination means including an electric illumination such as a receipt indicator or a liquid crystal back lighting; and
a secondary illumination layer containing one of a luminous material having a self light emitting ability and a fluorescent material having a reactive light emitting ability by a black light,
wherein the secondary illumination is provided on the rear surface of a transparent part to be protected from the external friction.

3. The portable radio device according to claim 1 or 2, wherein the secondary illumination is provided in an in-mold or hot-stamp transfer foil, and the secondary illumination layer is provided below an UV or a clear coating layer in the foil structure to be protected from the external friction.

4. The portable radio device according to claim 1 or 2, wherein the secondary illumination layer is provided in an in-mold or hot-stamp transfer foil, and the secondary illumination layer is provided on a rear surface of a transparent part to be protected from the external friction.

5. A portable radio device comprising:
primary illumination means including an electric illumination such as a receipt indicator or a liquid crystal back lighting; and
a part obtained by molding a material containing one of a luminous material having a self light emitting ability and a fluorescent material having a reactive light emitting ability by a black light,
wherein the part itself has a strength sufficient for enduring the external friction.

6. A portable radio device comprising:
primary illumination means including an electric illumination such as a receipt indicator or a liquid crystal back lighting; and
a part obtained by molding a material containing one of a luminous having a self light emitting ability and a fluorescent material having a reactive light emitting ability by a black light,
wherein the part is protected from the external friction by a UV curing coating or a clear coating.

7. A portable radio device comprising:
a part to be illuminated by electric illumination, obtained by molding a material containing one of a luminous material having a self light emitting ability and a fluorescent material having a reactive light emitting ability by a black light.

8. A portable radio device comprising:
a key button to be illuminated by electric illumination, obtained by molding a material containing one of a luminous material having a self light emitting ability and a fluorescent material having a reactive light emitting ability by a black light.

9. A portable radio device comprising:
a transparent cover of a receipt indicator to be illuminated by electric illumination, obtained by molding a material containing one of a luminous material having a self light emitting ability and a fluorescent material having a reactive light emitting ability by a black light.

10. A portable radio device comprising a liquid crystal panel to be illuminated by electric illumination, obtained by molding a material containing one of a luminous material having a self light emitting ability and a fluorescent material having a reactive light emitting ability by a black light.
